Europäisches Patentamt

European Patent Office

Office européen des brevets

(11) Veröffentlichungsnummer: **0 426 095 B1**

## (12) EUROPÄISCHE PATENTSCHRIFT

(45) Veröffentlichungstag der Patentschrift: **08.06.94**

(21) Anmeldenummer: **90120759.7**

(22) Anmeldetag: **30.10.90**

(51) Int. Cl.⁵: **G01B 5/00**

(54) **Koordinatenmessgerät.**

(30) Priorität: **02.11.89 DE 3936463**

(43) Veröffentlichungstag der Anmeldung:
**08.05.91 Patentblatt 91/19**

(45) Bekanntmachung des Hinweises auf die
Patenterteilung:
**08.06.94 Patentblatt 94/23**

(84) Benannte Vertragsstaaten:
**CH DE FR GB IT LI NL SE**

(56) Entgegenhaltungen:
**DE-A- 3 243 275**
**DE-A- 3 419 546**
**GB-A- 2 167 559**

(73) Patentinhaber: **Firma Carl Zeiss**

**D-73446 Oberkochen(DE)**

(84) Benannte Vertragsstaaten:
**CH DE FR IT LI NL SE**

(73) Patentinhaber: **CARL ZEISS-STIFTUNG HAN-
DELND ALS CARL ZEISS**

**D-89518 Heidenheim (Brenz)(DE)**

(84) Benannte Vertragsstaaten:
**GB**

(72) Erfinder: **Herzog, Klaus**
**Kopernikusstrasse 42**
**W-7082 Oberkochen(DE)**
Erfinder: **Breyer, Karl-Hermann, Dr.**
**Friedrich-Pfennig-Strasse 73**
**W-7920 Heidenheim (Brenz)(DE)**

**Beschreibung**

Die Erfindung betrifft ein Koordinatenmeßgerät mit einem Tisch zur Aufnahme des zu vermessenden Werkstücks und einer Vorrichtung, die das nutzbare Meßvolumen des Koordinatenmeßgerätes erweitert.

Bei Koordinatenmeßgeräten ist die Fläche der Granitplatte, die einmal das Maschinenbett bildet und zum anderen auch den Tisch zur Aufnahme des zu vermessenden Werkstückes darstellt, wesentlich größer als der in der Waagerechten, d.h. in der X- und Y-Richtung nutzbare Meßbereich des Gerätes. Dies ist u.a. dadurch bedingt, daß die Oberfläche dieser Granitplatte teilweise direkt als Führungsfläche für das verfahrbare z.B. Portal dient und diese Teile deshalb frei bleiben müssen. In Fahrrichtung des Portals ist die Führung außerdem immer länger als der Fahrweg, nämlich mindestens um die Basislänge der Seitenführung im Fuß des Portals. Aus Stabilitätsgründen ist diese Basislänge umso größer, je höher das Portal ist. Die überstehende Länge der Granitplatte liegt jedoch außerhalb des Meßvolumens der Maschine und kann weder zur Aufspannung von zu vermessenden Werkstücken noch für die Aufstellung einer Tasterwechseleinrichtung genutzt werden. Sie verteuert vielmehr das Gerät und macht es unnötig groß und schwer.

In der GB 2 167 559 A, der DE 32 43 275 A1, sowie der DE 34 19 546 A1 sind Koordinatenmeßgeräte in Portalbauweise beschrieben, wobei das in der erstgenannten Schrift beschriebene Gerät ein feststehendes Portal und einen beweglichen Werkstücktisch besitzt, während die in den beiden anderen Schriften genannten Geräte einen feststehenden Werkstücktisch und ein bewegliches Portal besitzen. Das Problem eines unzureichenden Meßbereiches ist in keiner der genannten Schriften angesprochen.

Es ist schon vorgeschlagen worden, den Meßbereich eines Koordinatenmeßgeräts vom Portaltyp senkrecht zur Fahrrichtung des Portals dadurch zu erweitern, daß man die Traverse beidseitig über die Portalfüße überstehen läßt und somit die Führung für den darauf laufenden Querschlitten verlängert. Eine solche Maschine ist z.B. in der DE-PS 30 24 455 beschrieben.

Diese Maßnahme läßt sich nicht ohne weiteres zur Ausweitung des Meßbereiches in Fahrrichtung des Portals einsetzen. Denn eine Verlängerung der Führungen bedeutet nichts anderes als eine Verlängerung der Granitplatte. Und selbst wenn man die außerhalb der Führungsbahnen liegenden Teile des Tisches entfernen würde, müßte die Granitplatte jedoch aus einem größeren Block herausgearbeitet werden, da die Führungsbahnen aus einem Stück bestehen müssen. Außerdem hat eine Verlängerung der Führungsbahnen zur Folge, daß der Maßstab zur Messung der Position des Portals in Fahrrichtung entsprechend lang wird. Die Herstellung langer Maßstäbe erfordert jedoch einen unverhältnismäßig hohen Aufwand, wenn eine bestimmte Maximallänge einmal überschritten ist.

In der DE-A-37 29 433 ist ein Koordinatenmeßgerät in Portalbauweise beschrieben, in dessen Granitplatte eine Vertiefung eingearbeitet ist, so daß auch hohe, das Meßvolumen übersteigende Werkstücke gemessen werden können. Dort wird erst der obere aus der Vertiefung herausragende Teil des Werkstücks gemessen und anschließend das Werkstück mit Hilfe eines Krans herausgehoben, gewendet, wieder in die Vertiefung eingesetzt und dann bezüglich auf einer anderen Seite vermessen. Das ist ein sehr umständliches und zeitraubendes Verfahren. Eine Erweiterung des Meßbereichs wird durch diese Maßnahmen nicht erreicht.

In der DE-C-17 98 191 ist ein Koordinatenmeßgerät beschrieben, das einen vertikal in mehreren Stufen verstellbaren Tisch besitzt. Bei diesem Gerät ist der vertikale Abstand zwischen dem Tastkopf und der unteren Position der Tischoberfläche relativ groß gegen den Meßbereich in Z-Richtung, d.h. den Verschiebebereich der vertikalen Pinole des Gerätes gewählt. Somit können auch relativ hohe Werkstücke vermessen werden und für flache Werkstücke wird der Tisch einfach auf eine bestimmte Mindesthöhe nach oben verstellt. Der Meßbereich wird hierdurch jedoch ebenfalls nicht erweitert.

Aus der DE-A-35 27 384 ist ein eindimensionales Längenmeßgerät bekannt, dessen Meßschlitten mittelbar in einem zweiten Schlitten geführt ist, der seinerseits in die gleiche Richtung beweglich auf dem feststehenden Maschinentisch geführt ist. Der die Position des Tastbolzens in Verschieberichtung messende Maßstab wird von zwei Geberköpfen abgetastet, wobei einer der Köpfe in verschiedenen Stellungen arretierbar ist.

Wollte man diese Maßnahmen auf Mehrkoordinatenmeßgeräte übertragen, so müßten entsprechend die doppelte Anzahl von hochgenauen Führungen vorgesehen werden. In Portalgeräten wäre dann das ohnehin schon sehr schwere Portal selbst auf einem zweiten, beweglichen Schlitten zu führen. Dies bedeutet einen unverhältnismäßig hohen Aufwand.

Es ist die Aufgabe der vorliegenden Erfindung, Koordinatenmeßgeräte mit einer Vorrichtung zu versehen, die das nutzbare Meßvolumen mit möglichst einfachen Mitteln und ohne die Geräteabmaße oder die Achslänge in einzelnen Führungsrichtungen zu vergrößern deutlich erweitert.

Diese Aufgabe wird gemäß Patentanspruch 1 gelöst.

Weitere Aüsgestaltungen sind mit den abhängigen Patentansprüchen erfaßt.

Mit diesen Maßnahmen ist es möglich, das Meßvolumen des Gerätes in einer der Meßachsen, bei Portalgeräten vorzugsweise in Portalverfahrrichtung, um eine Strecke zu erweitern, die dem Verschiebebereich der Trägerplatte entspricht. Die Trägerplatte kann beispielsweise eine Werkstückpalette sein, die über Luftlager auf dem Tisch des Koordinatenmeßgerätes aufliegt und somit ohne größeren Kraftaufwand von Hand oder durch einen entsprechenden Antrieb in die verschiedenen Stellungen verschoben werden kann.

Wenn ein Antrieb vorgesehen ist, so kann dieser neben dem Tisch des Gerätes aufgebaut werden. Es ist jedoch vorteilhaft, den Antrieb in eine Nut im Tisch des Koordinatenmeßgerätes einzulassen, wo er die Zugänglichkeit zum Meßvolumen des Gerätes nicht behindert.

Damit die in den verschiedenen Stellungen der Trägerplatte angetastete Meßpunkte am Werstück auch bezüglich ihrer Koordinatenmeßwerte aneinander angeschlossen werden können, ist es erforderlich, die Lage der Trägerplatte in den beiden Stellungen, d.h. vor und nach einer Verschiebung mit der für die Koordinatenmessung am Werstück erforderlichen Genauigkeit zu kennen. Dies kann einmal dadurch sichergestellt werden, daß an der Trägerplatte mehrere, Meßpunkte definierende Referenzkörper angebracht sind, die vom Tastkopf des Koordinatenmeßgerätes in den verschiedenen Stellungen der Trägerplatte antastbar sind. Vorteilhaft ist jedoch, wenn zusätzlich am Tisch des Koordinatenmeßgerätes mehrere Sensoren befestigt sind, von denen die Trägerplatte in den verschiedenen Stellungen angemessen wird. Es geht dann keine Meßzeit verloren, um die Lage der Trägerplatte zwischen den Verschiebevorgängen einzumessen. Statt dessen werden einfach die Signale der Sensoren vom Rechner des Koordinatenmeßgerätes bei der Umrechnung der Meßpunkte am Werkstück in ein gemeinsames Werkstück-Koordinatensystem mitberücksichtigt.

Weiterhin ist es möglich, die Trägerplatte selbst, z.B. entlang der oben genannten Nut im Tisch des Koordinatenmeßgerätes, in Verschieberichtung zu führen und das Ausmaß der Verschiebung durch einen weiteren Maßstab zu messen.

Wenn die Trägerplatte motorisch angetrieben wird, ist es von besonderem Vorteil, die Verfahrgeschwindigkeit für das Portal und die Trägerplatte so zu wählen, daß die Impulse von Portal und Trägerplatte entgegengesetzt gleich sind. Hierdurch werden Verkippungen des Gerätetisches im Zuge des Antriebs in Portalfahrrichtung völlig vermieden und es lassen sich aufgrund dieses dynamischen Massenausgleichs hohe Beschleunigungen und Verfahrgeschwindigkeiten in dieser Meßachse realisieren.

Weitere Vorteile der Erfindung ergeben sich aus der nachfolgenden Beschreibung von Ausführungsbeispielen anhand der Figuren 1 bis 5 der beigefügten Zeichnungen.

Figur 1   Zeigt ein Koordinatenmeßgerät vom Portaltyp mit einer Vorrichtung gemäß der Erfindung im Schnitt entlang einer vertikalen Ebene;

Figur 2   zeigt das Gerät aus Figur 1 im Schnitt entlang der Linie II-II in Figur 1,

Figur 3   zeigt ein weiteres Ausführungsbeispiel für ein Koordinatenmeßgerät vom Portaltyp mit einer Vorrichtung gemäß der Erfindung im Schnitt entlang einer vertikalen Ebene;

Figur 4   zeigt das Gerät aus Figur 1 im Schnitt entlang der Linie IV-IV in Figur 3;

Figur 5   zeigt das Gerät aus Figur 3 in Ansicht von hinten.

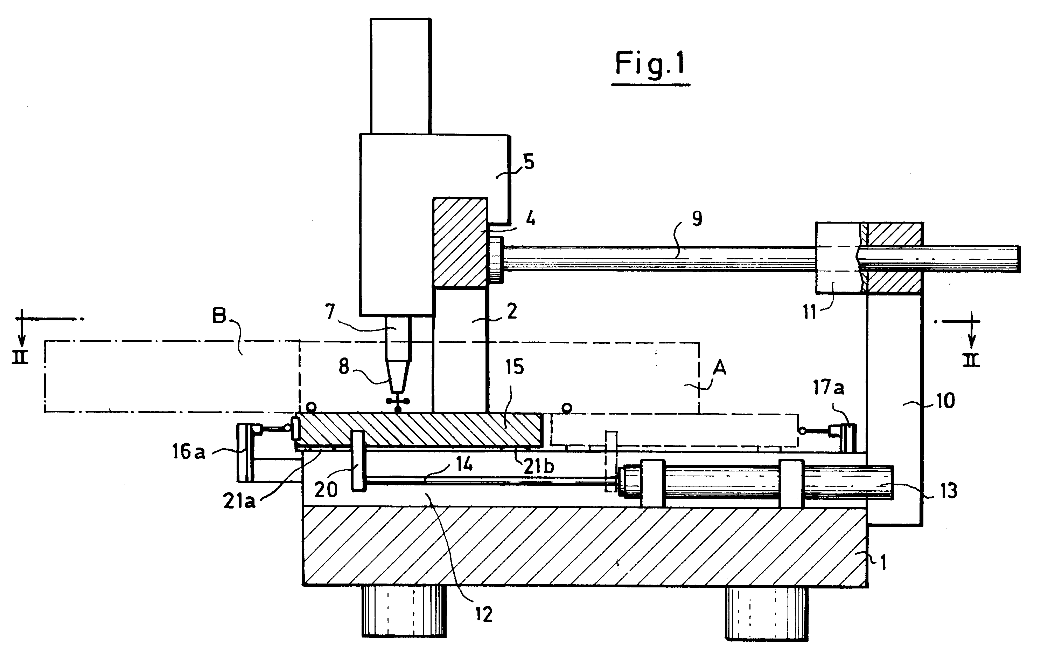

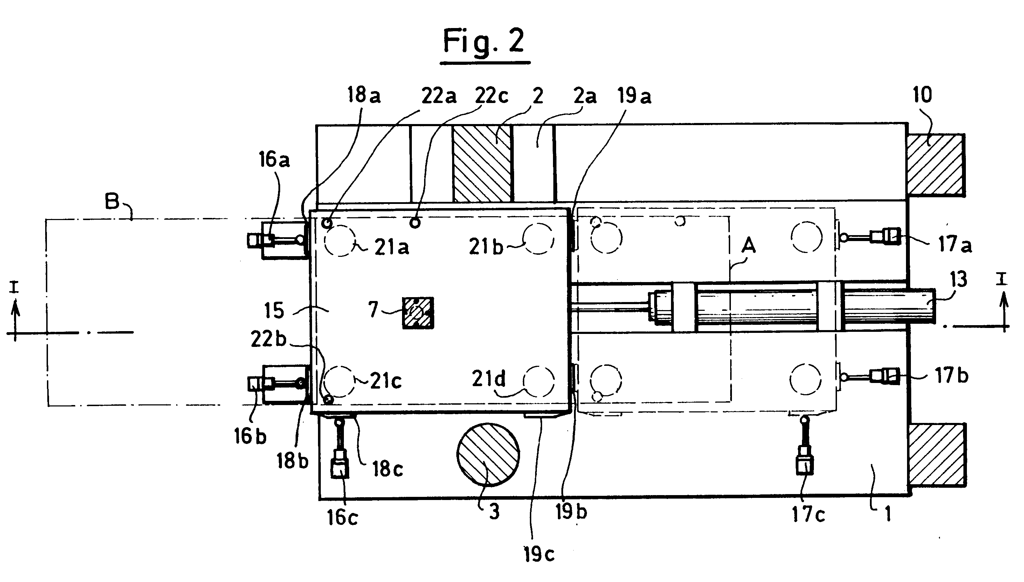

Das in den Figuren 1 und 2 dargestellte Koordinatenmeßgerät besitzt eine feststehende Granitplatte (1), die über hier nicht dargestellte Maßnahmen schwingungsgedämpft gelagert ist und die Maschinenbasis des Gerätes bildet. Auf der Oberfläche dieses Granittisches ist das aus den beiden Portalfüßen (2) und (3) sowie der Traverse (4) bestehende Portal verfahrbar.

Bewegt wird das Portal mittels einer an der Traverse (4) angelenkten Zugstange (9) über einen Antrieb (11), der am oberen Ende eines ebenfalls portalförmigen Trägers (10) befestigt ist. Der Träger (10) ist mit seinen beiden Portalfüßen an der hinteren Stirnfläche des Granittisches (1) befestigt.

Auf der Traverse (4) ist senkrecht zur Portalfahrrichtung ein Querschlitten (5) verfahrbar, der seinerseits die vertikal bewegliche Pinole (7) des Koordinatenmeßgerätes mit dem daran befestigten Tastkopf (8) trägt.

Koordinatenmeßgeräte mit dem vorstehend beschriebenen Aufbau sind an sich bekannt. Bei den bekannten Geräten stellt die Oberfläche der Granitplatte (1) gleichzeitig den Tisch zur Auflage des zu vermessenden Werkstückes dar. Das nutzbare Meßvolumen des Gerätes entspricht in etwa dem in Figur 2 mit A bezeichneten gestrichelten Bereich. Dieser ist bedeutend kürzer als die Länge der Granitplatte (1), mindestens um die Länge des in Figur 2 mit (2a) bezeichneten Fußes der Portalsäule (2), der die Führungsbasis in Verschieberichtung des Portals bildet.

Gemäß der Erfindung sind nun folgende zusätzliche Maßnahmen vorgesehen:
Zwischen den als Führungsflächen in Portalfahrrichtung dienenden Teilen der Granitplatte (1) ist eine bezüglich ihrer Breite auf das Portalinnenmaß abgestimmte Trägerplatte (15) in Portalfahrrichtung verschieblich gelagert. Die Trägerplatte (15) stützt sich über vier Luftlager (21a-d) auf der Granitplatte (1) ab und kann somit reibungsfrei verschoben werden. In die Granitplatte (1) ist eine Längsnut (12) eingefräst. In diese Nut ist ein Pneumatikzylinder (13) eingesetzt, dessen Zugstange (14) an einem an die Unterseite der Trägerplatte (15) angesetzten Verbindungsteil (20) angreift. Die Trägerplatte (15) läßt sich mit Hilfe des pneumatischen Antriebs in die beiden durchgezogen und gestrichelt gezeichneten Stellungen parallel zur Verfahrrichtung des Portals verschieben.

Auf der Trägerplatte (15) können nun verhältnismäßig lange, auch über die Granitplatte (1) vorn vorstehende Teile vermessen werden, indem die Trägerplatte (15) nacheinander in die beiden verschiedenen Stellungen verschoben wird. Der mit Hilfe dieser Maßnahme gewonnene, zusätzliche Teil des Meßvolumens ist strichpunktiert gezeichnet und mit dem Bezugszeichen B versehen.

Damit die Lage der Trägerplatte (15) in den beiden Stellungen jeweils exakt gemessen und die Lagekoordinaten der Trägerplatte (15) beim Überführen der Koordinatenmeßwerte am Werkstück in ein gemeinsames, auf das gesamte Meßvolumen bezogenes Koordinatensystem berücksichtigt werden können, sind drei Referenzpunkte vorgesehen. Diese Referenzpunkte werden beispielsweise durch drei Kugeln (22a-c) auf der Oberfläche der Trägerplatte (15) bzw. deren Mittelpunkt gebildet, können jedoch auch durch andere geometrische Körper wie z.B. Kegel, Kugeltripel, Scheibe mit Bohrung etc. realisiert werden.

Durch die Koordinaten der drei Referenzpunkte ist die Lage der Trägerplatte (15) immer eindeutig bestimmt so daß nach jedem Verschiebevorgang durch Antasten dieser Punkte auch die Lage der mitbewegten Teile des Werkstücks bekannt ist und die beiden Teile rechnerisch aneinander angeschlossen werden können.

Um jedoch nicht die Lage der Trägerplatte nach jedem Verschiebevorgang mit dem Koordinatenmeßgerät einmessen zu müssen, sind weiterhin zu beiden Enden des Verschiebebereiches je drei Abstandssensoren in Form von Induktivtastern (16a-c) und (17a-c) vorgesehen, von denen entsprechende Planflächen (18a-c) und (19a-c) an der Stirnseite sowie einer Seitenfläche der Trägerplatte angetastet werden. Die Signale dieser Induktivtaster bzw. die daraus gewonnenen Lagemeßwerte sind dem Rechner des Koordinatenmeßgerätes zugeführt. Sie stehen somit nach jeder Verschiebung sofort zur Verfügung und können als Korrekturwerte den Koordinatenmeßwerten des zu vermessenden Werkstückes in den beiden verschobenen Stellungen zugeschlagen werden.

Die Induktivtaster erfassen die Lage der Trägerplatte (15) in der Ebene der Platte (1). Insoweit sich bei der Verschiebung der Trägerplatte (15) auch Lageänderung bzw. Verkippungen gegen diese Ebene ergeben, sind solche Abweichungen reproduzierbar, da sie von der Form der Oberfläche der Platte (1) abhängen und die Granitplatte genügend langzeitstabil ist. Es ist deshalb nur erforderlich, die Lage der Trägerplatte (15) durch Antasten der drei Kugeln (22a-c) einmal in beiden Lagen der Trägerplatte zu erfassen. Bei diesem Vorgang werden gleichzeitig die Induktivtaster (16a-c) und (17a-c) kalibriert. Nach jedem weiteren Verschieben der Trägerplatte (15) wird ihre Position dann aus den Kalibrierdaten und den Anzeigewerten der Induktivmeßsysteme (16a-c) und (17a-c) vom Rechner des Koordinatenmeßgerätes berechnet.

Die beschriebene Vorrichtung dient nicht nur zur Erweiterung des Meßvolumens des Gerätes sondern kann außerdem vorteilhaft dazu benutzt werden, das Beladen des Gerätes zu erleichtern oder ein größeres, normalerweise außerhalb des Meßbereiches angeordnetes Tastermagazin für den rechnergesteuerten Tasterwechsel in den Meßbereich des Gerätes einzufahren.

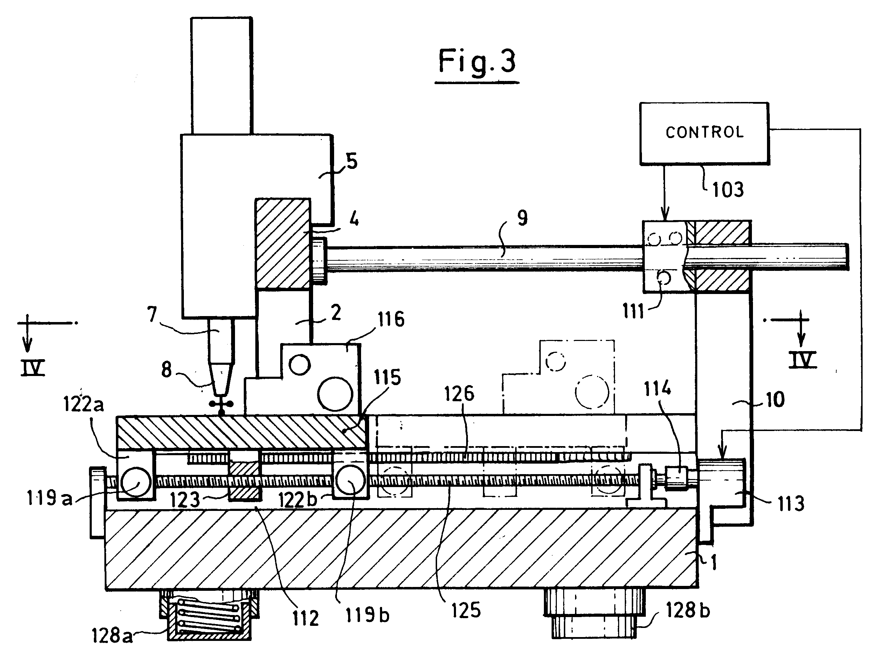

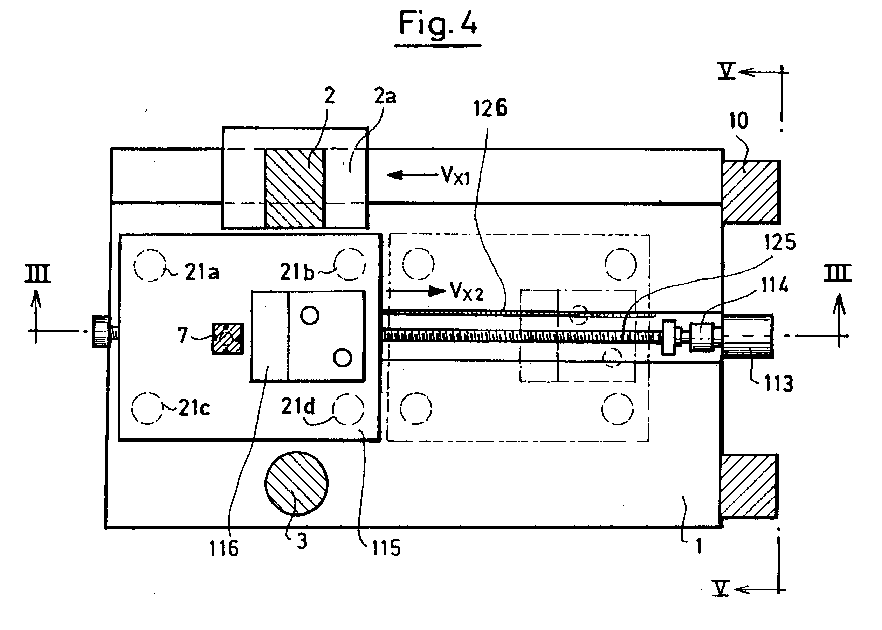

Das in den Figuren 3-5 dargestellte, zweite Ausführungsbeispiel ist ebenfalls ein Koordinatenmeßgerät vom Portaltyp. Gleiche Teile sind mit den gleichen Bezugszeichen versehen wie die im Gerät nach Figur 1 und 2 und werden deshalb an dieser Stelle nicht nochmals beschrieben. Darüber hinaus weist das Gerät nach Figur 3-5 folgende Unterschiede auf:

Die auf der Granitplatte (1) in Fahrtrichtung des Portals (2) verschiebbare Trägerplatte (115) ist mittels einer Spindel (125) von einem Antriebsmotor (113) angetrieben. Mit (114) ist die Kupplung zwischen Motor (113) und Spindel (125) bezeichnet. Die Spindel (125) ist über eine Spindelmutter (123) an die Trägerplatte (115) gekoppelt. Die Trägerplatte (115) ist weiterhin mittels zweier paarweise gegeneinander verspannter Luftlager (119a/d) und (119b/c) in Verschieberichtung geführt, die über mittig an der Unterseite der Trägerplatte (115) angebaute Halterungen (122a) und (122b) mit der Trägerplatte (115) verbunden sind und an den Innenseiten der Nut (112) anliegen. Diese Bereiche der Innenseite der Nut (112) dienen deshalb als Führung für die Trägerplatte (115) in Portalfahrrichtung.

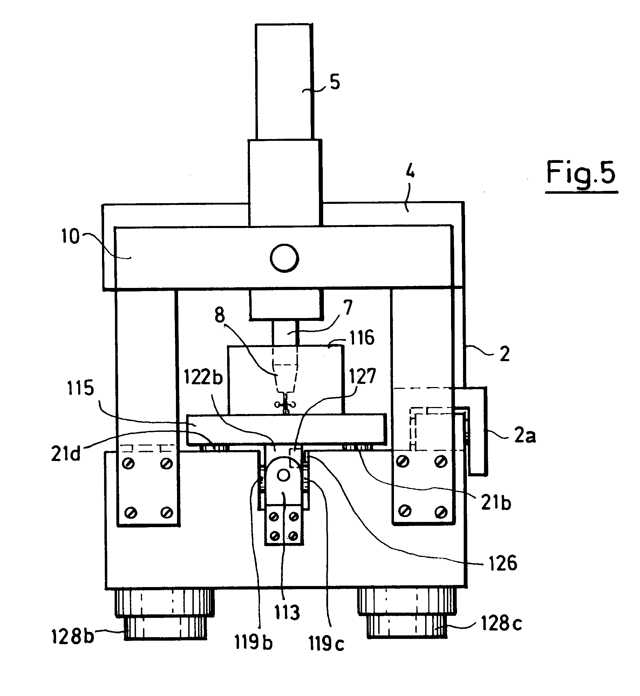

Das Ausmaß der Verschiebung der Trägerplatte (115) wird mit Hilfe eines Maßstabes (126) gemessen, der oben an einer Innenseite der Nut (112) befestigt ist und von einem in Figur 5 gestrichelt angedeuteten Lesekopf (127) abgetastet wird, der in einen der beiden Träger (122b) integriert ist.

In den Figuren ist ein auf der Trägerplatte aufliegendes Werkstück dargestellt. Es trägt das Bezugszeichen (116).

Das Portal des Koordinatenmeßgerätes wird über die Zugstange (9) z.B. mit Hilfe eines Reibradgetriebes von einem Antrieb (111) verfahren. Der Maßstab, der die Verschiebung des Portals in Fahrtrichtung mißt, ist in den Figuren 3-5 nicht dargestellt.

Beide Antriebe, der Antriebsmotor (113) für die Trägerplatte (115) und der Antrieb (111) für das Portal werden gemeinsam von einer Steuerung (103) aus bedient. Dabei ist die Firmware des in der Steuerung (103) enthaltenen Mikroprozessors so programmiert, daß die Trägerplatte und das Portal bei allen Fahrbewegungen im Zuge eines Meßvorganges gleichzeitig in entgegengesetzte Richtungen mit Geschwindigkeiten $V_{x1}$ und $V_{x2}$ angetrieben werden, so daß gilt:

$$mp \times \vec{V}_{x1} = - mt \times \vec{V}_{x2}$$

wobei mp die vom Portalantrieb (111) zu bewegende Masse und mt die vom Antrieb (113) zu bewegende Masse der Trägerplatte einschließlich eines für durchschnittliche Werkstücke geltenden Anteils ist, d.h. die Impulse $m_{xv}$ der beiden bewegten Teile sind entgegengesetzt gleich.

Auf diese Weise ist einmal sichergestellt, daß der Maschinentisch (1) keine wechselnden Lasten während Meßbewegungen in Portalfahrrichtung x erfährt. Außerdem kompensieren sich die in der Beschleunigungsphase der Antriebe auftretenden Kippmomente, die in Reaktion auf die bewegten Massen des Portals und der Trägerplatte auf den Maschinentisch (1) übertragen werden, weitgehend. Die Schwingungsdämpfer (128a-d), auf denen der Maschinentisch (1) ruht, werden deshalb nicht sehr beansprucht und können als Luftdämpfer ausgeführt werden. Außerdem ist die Zeit verkürzt, während der das Meßgerät schwingt und nicht für eine Meßwertübernahme zur Verfügung steht. Zusätzlich sind höhere Portalfahrgeschwindigkeiten und Beschleunigungswerte realisierbar, wodurch die Meßgeschwindigkeit ebenfalls gesteigert wird.

Der Meßbereich des Gerätes ist ebenso wie der des anhand der Figuren 1 und 2 beschriebenen Gerätes vergrößert und setzt sich aus den Fahrwegen des Portals (2) und der Trägerplatte (115) zusammen.

**Patentansprüche**

1. Koordinatenmeßgerät mit einem Tisch (1) zur Aufnahme des zu vermessenden Werkstücks (116), mehreren gegenüber dem Tisch in den drei Koordinatenrichtungen beweglichen Meßschlitten (2-4, 5,7), von denen einer den Tastkopf (8) des Gerätes trägt, und einer Vorrichtung, die das nutzbare Meßvolumen des Koordinatenmeßgerätes erweitert, dadurch gekennzeichnet, daß die Vorrichtung eine zusätzlich zu den Bewegungen der Meßschlitten auf dem Tisch (1) in mindestens zwei definierte Stellungen in Fahrtrichtung eines der Meßschlitten verschiebbare Trägerplatte (15) für das Werkstück (16) und Mittel (16/17; 8/22) zur Messung der Lage der Trägerplatte in den verschiedenen Stellungen enthält.

2. Koordinatenmeßgerät nach Anspruch 1, dadurch gekennzeichnet, daß die Trägerplatte (15; 115) über Luftlager (21) auf dem Tisch (1) des Koordinatenmeßgerätes aufliegt.

3. Koordinatenmeßgerät nach Anspruch 1, dadurch gekennzeichnet, daß ein Antrieb (13; 113) für die Verschiebung der Trägerplatte (15; 115) in die verschiedenen Stellungen vorgesehen ist.

4. Koordinatenmeßgerät nach Anspruch 3, dadurch gekennzeichnet, daß der Antrieb (13; 113) in eine Nut (12; 112) im Tisch (1) des Koordinatenmeßgerätes eingelassen ist.

5. Koordinatenmeßgerät nach Anspruch 1, dadurch gekennzeichnet, daß an der Trägerplatte (15) mehrere, Meßpunkte definierende Referenzkörper (22a, b) angebracht sind, die vom Tastkopf (8) des Koordinatenmeßgerätes in den verschiedenen Stellungen der Trägerplatte (15) antastbar sind.

6. Koordinatenmeßgerät nach Anspruch 1, dadurch gekennzeichnet, daß am Tisch (1) des Koordinatenmeßgerätes mehrere Sensoren (16a-c, 17a-c) befestigt sind, von denen die Trägerplatte (15) in den verschiedenen Stellungen angemessen wird, und daß die Signale der Sensoren dem Rechner des Koordinatenmeßgerätes zugeführt sind.

7. Koordinatenmeßgerät nach Anspruch 1, dadurch gekennzeichnet, daß das Koordinatenmeßgerät ein auf dem feststehenden Tisch (1) verfahrbares Portal (2-4) besitzt und die Trägerplatte (15; 115) in Portalfahrrichtung verschiebbar ist.

8. Koordinatenmeßgerät nach Anspruch 1, dadurch gekennzeichnet, daß Mittel (Maßstab 126) zur kontinuierlichen Messung der Verschiebung der Trägerplatte (115) vorgesehen sind.

9. Koordinatenmeßgerät nach Anspruch 4, dadurch gekennzeichnet, daß die Trägerplatte in der Nut (112) geführt ist.

10. Koordinatenmeßgerät nach Anspruch 7, dadurch gekennzeichnet, daß das Koordinatenmeßgerät eine Steuerung (103) besitzt, die mit den Antrieben der Trägerplatte (115) und des Portals (2) verbunden ist und die Trägerplatte und das Portal gleichzeitig zusammen aber in entgegengesetzte Richtungen verfährt bzw. verschiebt.

11. Koordinatenmeßgerät nach Anspruch 10, dadurch gekennzeichnet, daß die Beträge der Verfahrgeschwindigkeiten ($V_{x1}$, $V_{x2}$) so eingestellt sind, daß die Impulse der bewegten Teile von Portal (2) und Trägerplatte (115) im wesentlichen gleich sind.

12. Koordinatenmeßgerät nach Anspruch 11, dadurch gekennzeichnet, daß die Masse des auf der Trägerplatte aufgelegten Werkstückes (116) bei der Bestimmung der Verfahrgeschwindigkeit $V_{x2}$ der Trägerplatte mit berücksichtigt ist.

**Claims**

1. A coordinate measurement instrument having a table (1) for receiving the workpiece (116) to be measured, a plurality of measuring slides (2-4, 5, 7) beeing displaceable in the three coordinate directions with respect to the table, one of said measuring slides carrying the probe head (8) of the instrument, and a device which increases the useful measurement volume of the coordinate measurement instrument, characterized by the fact that the device has a support plate (15) for the workpiece (16) which can be displaced on the table (1) additionally along the direction of displacement of one of said measuring slides into at least two defined positions, and means (16/17; 8/22) for measuring the position of the support plate in the different positions.

2. A coordinate measurement instrument according to Claim 1, characterized by the fact that the support plate (15; 115) rests via air bearings (21) on the table (1) of the coordinate measurement instrument.

3. A coordinate measurement instrument according to Claim 1, characterized by the fact that a drive (13; 113) is provided for displacement of the support plate (15; 115) into the different positions.

4. A coordinate measurement instrument according Claim 3, characterized by the fact that the drive (13; 113) is inserted in a groove (12; 112) in the table (1) of the coordinate measurement instrument.

5. A coordinate measurement instrument according to Claim 1, characterized by the fact that several reference bodies (22a, b) which define measurement points are attached to the support plate (15) and can be probed by the probe head (8) of the coordinate measurement instrument in the different positions of the support plate (15).

6. A coordinate measurement instrument according to Claim 1, characterized by the fact that several sensors (16a-c, 17a-c) are attached on the table (1) of the coordinate measurement instrument, the sensors measuring the support plate (15) in the different positions, and that the signals of the sensors are fed to the computer of the coordinate measurement instrument.

7. A coordinate measurement instrument according to Claim 1, characterized by the fact that the coordinate measurement instrument has a gantry (2-4) which can be traversed on the stationary table (1) and the support plate (15; 115) is displaceable in the direction of travel of the gantry.

8. A coordinate measurement instrument according to Claim 1, characterized by the fact that means (scale 126) for the continous measuring of the displacement of the support plate (115) are provided.

9. A coordinate measurement instrument according to Claim 4, characterized by the fact that the support plate is guided in the groove (112).

10. A coordinate measurement instrument according to Claim 7, characterized by the fact that the coordinate measurement instrument has a control (103) which is connected to the drives of the support plate (115) and of the gantry (2) and traverses and/or displaces the support plate and the gantry together at the same time but in opposite directions.

11. A coordinate measurement instruement according to Claim 10, characterized by the fact that the amounts of the displacement velocities ($V_{x1}$, $V_{x2}$) are so adjusted that the momenta of the moved parts of gantry (2) and support plate (115) are substantially identical.

12. A coordinate measurement instrument according to Claim 11, characterized by the fact that the mass of the workpiece (116) which has been placed on the support plate is also taken into account in the determination of the displacement velocity $V_{x2}$ of the support plate.

**Revendications**

1. Machine à mesurer multicoordonnées équipée d'une table (1) recevant la pièce à mesurer (116), de plusieurs chariots de mesure (2-4, 5-7) mobiles dans les trois axes par rapport à la platine, dont l'un porte la tête de palpage (8) de la machine, ainsi que d'un dispositif permettant d'agrandir son volume de mesure utile, caractérisée en ce que ledit dispositif comprend une plaque support (15) qui porte la pièce (16) et qui, outre les mouvements des chariots de mesure sur la table (1), peut être placée dans au moins deux positions définies dans le sens du déplacement de l'un desdits chariots, ainsi que des moyens (16/17; 8/22) destinés à relever les coordonnées de ladite plaque support dans les différentes positions.

2. Machine à mesurer multicoordonnées selon la revendication 1, caractérisée en ce que la plaque support (15; 115) repose sur la table (1) de la machine par l'intermédiaire de paliers d'air (21).

3. Machine à mesurer multicoordonnées selon la revendication 1, caractérisée en ce qu'un système d'entrainement (13; 113) amène la plaque support (15; 115) dans ses différentes positions.

4. Machine à mesurer multicoordonnées selon la revendication 3, caractérisée en ce que ledit système d'entraînement (13; 113) est encastré dans une rainure (12; 112) aménagée dans la table (1) de la machine.

5. Machine à mesurer multicoordonnées selon la revendication 1, caractérisée en ce que plusieurs corps de référence (22 a, b) disposés sur la plaque support (15) et définissant des points de mesure peuvent être palpés par la tête de palpage (8) de la machine dans les différentes positions de la plaque support (15).

6. Machine à mesurer multicoordonnées selon la revendication 1, caractérisée en ce que plusieurs capteurs (16a-c, 17a-c) fixés sur la table (1) de la machine relèvent les coordonnées de la plaque support (15) dans ses différentes positions et que les signaux provenant desdits capteurs sont transmis à l'ordinateur de la machine.

7. Machine à mesurer multicoordonnées selon la revendication 1, caractérisée en ce qu'elle est dotée d'un portique (2-4) mobile sur la table fixe (1) et en ce que la plaque support (15; 115) peut être déplacée dans la même direction que ledit portique.

8. Machine à mesurer multicoordonnées selon la revendication 1, caractérisée en ce que des moyens (échelle 126) sont prévus pour mesurer continuellement le déplacement de la plaque support (15).

9. Machine à mesurer multicoordonnées selon la revendication 4, caractérisée en ce que la plaque support est guidée le long de la rainure (112).

10. Machine à mesurer multicoordonnées selon la revendication 7, caractérisée en ce qu'elle est munie d'une unité de commande (103) qui est reliée aux systèmes d'entraînement de la plaque support (115) et du portique (2) et qui assure le déplacement simultané de la plaque support et du portique dans des directions opposées.

11. Machine à mesurer multicoordonnées selon la revendication 10, caractérisée en ce que les vitesses de déplacement $(V_{x1}, V_{x2})$ sont réglées de manière à ce que les impulsions des parties mobiles du portique d'une part (2) et de la plaque support d'autre part soient sensiblement égales.

12. Machine à mesurer multicoordonnées selon la revendication 11, caractérisée en ce que la masse de la pièce (116) est prise en considération lors de la détermination de la vitesse de déplacement $V_{x2}$ imprimée à la plaque support, sur laquelle elle est disposée.

Fig.1

8

EP 0 426 095 B1

Fig. 2

EP 0 426 095 B1

Fig.3

EP 0 426 095 B1

# Fig.4

EP 0 426 095 B1

Fig.5